# EUROPEAN PATENT APPLICATION

(11) **EP 3 719 308 A1**
(43) Date of publication of application: **07.10.2020**
(21) Application number: 19166605.6
(22) Date of filing: 01.04.2019
(51) Int. Cl.: F03D 17/00, G01S 13/95, G01C 13/00

(54) **WIND TURBINE WITH SEA LEVEL WAVE CHARACTERISTIC DETERMINATION**

(71) Applicant: Siemens Gamesa Renewable Energy A/S, 7330 Brande (DK)
(72) Inventor: Nagel, Eirik, 24939 Flensburg (DE); Nieuwenhuizen, John, 8700 Horsens (DK)
(74) Representative: Aspacher, Karl-Georg

(57) **Abstract**

The present invention is directed to a wind turbine (1) configured to be disposed in or above a sea floor (S) and comprising a tower (2) configured to protrude from a sea level (S), a nacelle (3) and a hub (4). The wind turbine (1) further comprises a transmitter (10) configured to transmit a first electromagnetic wave (100) to be reflected on the sea level (S) and a receiver (20) configured to receive the reflected electromagnetic wave (200), wherein at least one of the transmitter (10) and the receiver (20) is arranged either at the nacelle (3), the hub (4) or the tower (2). The wind turbine further comprises a processing unit (30) being in communication with the receiver (20) and configured to analyse the reflected electromagnetic wave (200) such that a wave characteristic of the sea level (S) is determined.

## Description

### Field of invention

The present invention relates to the technical field of wind turbines. In particular, the present invention is directed to a wind turbine which is capable to determine a wave characteristic of a sea level where the wind turbine is placed.

### Art Background

In the above defined technical field, wind forecasts were made by radar systems such as LIDAR and wind measurement stations around a wind turbine. However, the accuracy, the costs and the robustness of the conventional solutions can still be improved.

### Summary of the Invention

It is the object of the present invention to provide a wind turbine and a method of determining a wave characteristic of a sea level, which are more accurate, cheaper and more robust. This object is achieved by the subject matters of the independent claims. The present invention is further developed as defined in the dependent claims.

According to a first aspect of the present invention, a wind turbine is configured to be disposed in or above a sea floor and comprises a tower configured to protrude from a sea level, a nacelle mounted to the tower and a hub mounted to the nacelle. The wind turbine further comprises a transmitter configured to transmit a first electromagnetic wave to be reflected on the sea level and a receiver configured to receive the reflected electromagnetic wave, wherein at least one of the transmitter and the receiver is arranged either at the nacelle, the hub or the tower. In the context of the entire specification, the term "arranged at" does also include the meaning "arranged in". In other words, at least one of the transmitter and the receiver can be arranged either in the tower, in the nacelle or in the hub.

The wind turbine further comprises a processing unit being in communication with the receiver and configured to analyse the reflected electromagnetic wave such that a wave characteristic of the sea level is determined. Preferably, at least one of the transmitter and the receiver is arranged either at the nacelle or the hub. The transmitter and the receiver may comprise at least one of an antenna, an amplifier, a signal generator, a signal converter, and a combination thereof.

The wind turbine enables a prediction of the wind speed and the wind direction for offshore wind turbines, for example based on a Bragg-reflexion and a radar wave. For example based on a radar transmitter, which does not use optical parts, a wide range up to a few kilometres is possible. Moreover, the system is cheap and robust. The wind speed can be measured or predicted in a main lobe direction of an antenna of the transmitter. Data about the determined wave characteristic of the sea level can be used for a control of the wind turbine.

Preferably, the transmitter and the receiver are connected via a combiner to a common antenna so that the costs of the system are reduced.

Preferably, the wind turbine further comprises a radome being arranged at the hub and covering an antenna of the transmitter and/or the receiver so that the antenna(s) is/are protected in harsh environments and the system is more robust.

Preferably, the processing unit is arranged at the nacelle and the transmitter and the receiver are arranged at the hub, wherein the transmitter comprises a signal generator and the receiver comprises an amplifier, the signal generator and the amplifier are arranged at the hub, and the signal generator and the amplifier are connected via an optical link or a wireless connection to the processing unit. Thereby, the individual components are distributed in the nacelle and the hub, wherein the optical link or a wireless connection enables a signal connection between the nacelle and the hub which are usually rotated relative to each other.

Preferably, the processing unit is configured to determine at least one of a wind speed, a wind direction, a wind forecast and a ship approximation condition from the determined wave characteristic of the sea level, wherein the ship approximation condition is a condition that allows a ship to approximate or dock at the wind turbine.

Preferably, the processing unit is configured to determine the wave characteristic based on an angle of a reflection plane of the sea level with respect to a horizontal. Thereby, a very accurate prediction of the wind speed or direction can be achieved.

More preferred, the processing unit is configured to use the Bragg's law 2d·sinθ = n·λ in determining the wave characteristic, where d is either a distance between two wave peaks or a peak-to-peak height of a wave of the sea level, θ is a scattering angle of the reflected electromagnetic wave with respect to a horizontal, λ is a wavelength of the electromagnetic wave, and n is a positive integer. Thereby, even a more accurate prediction of the wind speed or direction can be achieved.

In a second aspect of the present invention, a method of determining a wave characteristic of a sea level is provided. The method comprises the following steps: disposing a wind turbine in or above a sea floor, the wind turbine comprising a tower protruding from a sea level, a nacelle mounted to the tower, a hub mounted to the nacelle, a transmitter and a receiver, wherein at least one of the transmitter and the receiver is arranged either at the nacelle or the hub; transmitting by a transmitter a first electromagnetic wave to be reflected on the sea level; receiving the reflected electro-magnetic wave by the receiver; analysing the reflected electromagnetic wave; and determining a wave characteristic of the sea level based on the analysed, reflected electromagnetic wave.

Preferably, the method further comprises a step of determining at least one of a wind speed, a wind direction, a wind forecast and a ship approximation condition from the determined wave characteristic of the sea level, wherein the ship approximation condition is a condition that allows a ship to approximate or dock at the wind turbine.

Preferably, the wave characteristic is determined based on an angle of a reflection plane of the sea level with respect to a horizontal.

Preferably, the wave characteristic is determined by use of the Bragg's law 2d·sinθ = n·λ, where d is either a distance between two wave peaks or a peak-to-peak height of a wave of the sea level, θ is a scattering angle of the reflected electromagnetic wave with respect to a horizontal, λ is a wavelength of the electromagnetic wave, and n is a positive integer.

The above method can achieve the same advantages like the wind turbine according to the present invention.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment to which the invention is not limited.
- Fig. 1: shows a wind turbine according to an embodiment of the present invention.
- Fig. 2: shows a schematic view of a transmitter and a receiver according to an embodiment of the present invention.
- Fig. 3: shows a schematic view of a transmitter and a receiver according to an embodiment of the present invention.
- Fig. 4: shows a schematic view of a configuration of a processing unit according to an embodiment of the present invention.
- Fig. 5: shows a wind turbine according to an embodiment of the present invention.
- Fig. 6: shows a wind turbine according to an embodiment of the present invention.
- Fig. 7: shows a principle of analysing a reflected electromagnetic wave such that the wave characteristic of the sea level is determined according to an embodiment of the present invention.

### Detailed Description

The illustrations in the drawings are schematically. It is noted that in different figures, similar or identical elements are provided with the same reference signs.

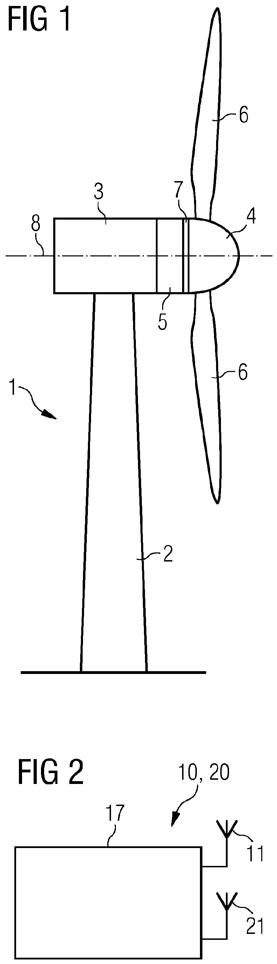

**Fig. 1** shows a wind turbine 1. The wind turbine 1 is configured to be disposed in or above a sea floor (offshore). The wind turbine 1 can also be disposed above the sea floor S in a floating manner. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. The hub 4 is connected directly to the generator 5, thus the wind turbine 1 is referred to as a gearless, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1. The generator 5 is accommodated within the nacelle 3. The generator 5 is arranged and prepared for converting the rotational energy from the hub 4 into electrical energy in the shape of an AC power. One end of the generator 5 at the hub side is referred as drive end, and the other end of the generator 5 at the nacelle side is referred as non-drive end.

The wind turbine 1 further comprises a transmitter 10 (for example in Fig. 2) configured to transmit a first electromagnetic wave 100 to be reflected on the sea level S and a receiver 20 (for example in Fig. 2) configured to receive the reflected electromagnetic wave 200, wherein at least one of the transmitter 10 and the receiver 20 is preferably arranged either at the nacelle 3 or the hub 4. In the context of the entire present invention, the term "arranged at" does also include the meaning "arranged in". In other words, at least one of the transmitter 10 and the receiver 20 can be arranged either in the nacelle 3 or in the hub 4.

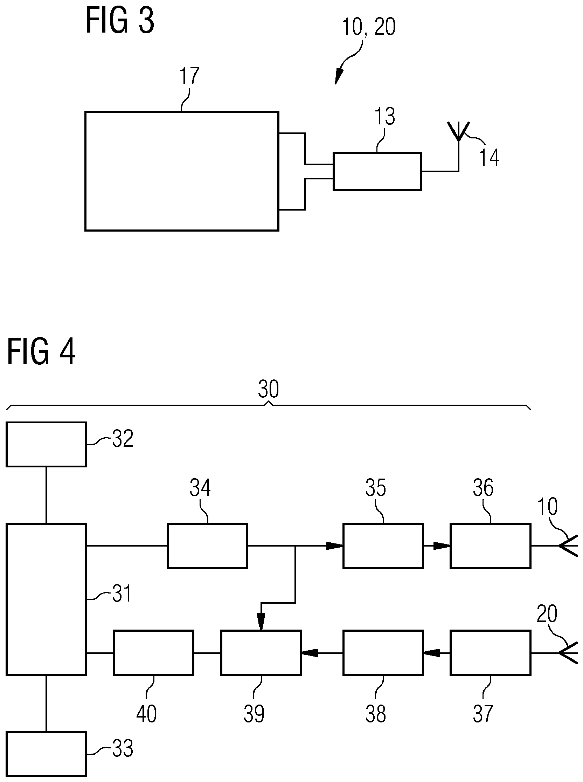

The wind turbine 1 further comprises a processing unit 30 (for example in Fig. 4) being in communication with the receiver 20 and optionally with the transmitter 10 and configured to analyse the reflected electro-magnetic wave 200 (and optionally the first electromagnetic wave 100) such that a wave characteristic of the sea level S is determined.

**Fig. 2** shows a schematic view of the transmitter 10 and the receiver 20 according to an embodiment of the present invention. Basically, the transmitter 10 is configured to transmit an electromagnetic wave 100 to be reflected on the sea level S, and the receiver 20 is configured to receive the reflected electromagnetic wave 200. The transmitter 10 and the receiver 20 may include at least one of an antenna, an amplifier, a signal generator, a signal converter, etc. Preferably, the electromagnetic wave 100 is a radar wave. According to Fig. 2, the transmitter 10 comprises an antenna 11 and a transmitter circuit inside a transceiver unit 17. The transmitter circuit can comprise a signal generator. The receiver 20 comprises an antenna 21 and a receiver circuit inside the transceiver unit 17. The receiver circuit can comprise an amplifier. Preferably, the transmitter and receiver circuits can be implemented in a single circuit inside the transceiver unit 17.

**Fig. 3** shows a schematic view of a transmitter 10 and a receiver 20 according to another embodiment of the present invention. The embodiment of Fig. 3 differs from the embodiment of Fig. 2 in that the transmitter 10 and the receiver 2) are connected via a combiner 13 to a common antenna 14.

**Fig. 4** shows a schematic view of a configuration of a processing unit 30 according to an embodiment of the present invention. The processing unit 30 comprises a processor 31 which can comprise at least one of a CPU (Central-Processing-Unit), an NC (Numerical-Control) and an FPGA (Field-Programmable-Gate-Array). The processor 31 analyses the reflected electromagnetic wave 200 such that the wave characteristic of the sea level S is determined. The processor 31 is connected to volatile and/or non-volatile memory means such as a RAM 32 and a hard-disk 33. An output of the processor 31 is further connected to a signal generator 34 which generates a pre-transmitting signal. The pre-transmitting signal is filtered by a first filter 35 and then amplified by a first amplifier 36. The transmitter 10 transmits the amplified signal as the electromagnetic wave 100 to the sea level S.

An output of the receiver 20, which receives the reflected electromagnetic wave 200, is connected to a second amplifier 37 which amplifies the signal of the reflected electromagnetic wave 200. An output of the second amplifier 37 is connected to an input of a second filter 38 which filters the signal output from the second amplifier 37. The second filter 38 is connected to a mixer 39 so that the output from the second filter 38 is input in the mixer 39. An input of the mixer 39 is further connected to an output of the signal generator 34. The mixer 39 thus processes or mixes the signals which are output from the signal generator 34 and the second filter 38. An output of the mixer 39 is connected to an input of an Analog-to-Digital-converter (A/D-converter) 40 in which an analog signal of the mixer 39 is converted to a digital signal and eventually input into the processor 31 for the further processing.

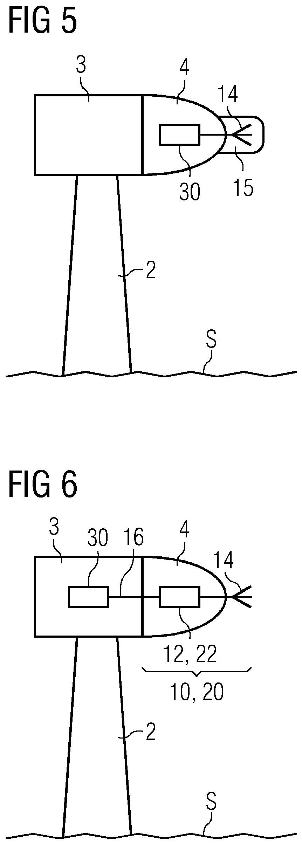

**Fig. 5** shows a wind turbine 1 according to an embodiment of the present invention. A radome 15 is arranged at the hub 4 and covers a common antenna 14 of the transmitter 10 and the receiver 20. The processing unit 30 is likewise arranged at the hub 4.

**Fig. 6** shows a wind turbine 1 according to an embodiment of the present invention. The processing unit 30 is arranged at (or in} the nacelle 3 and the transmitter 10 and the receiver 20 are arranged at (or in) the hub 4. The transmitter 10 and the receiver 20 share a common antenna 14. The transmitter 10 comprises a signal generator 12 and the receiver 20 comprises an amplifier 22. The signal generator 12 and the amplifier 22 are arranged in a single unit at (or in) the hub 4. The signal generator 12 and the amplifier 22 are connected via an optical link 16 or a wireless connection to the processing unit 30 which is arranged at the nacelle 3. Thereby, a proper connection between the nacelle 3 and the hub 4 can be achieved, which are usually rotated relative to each other.

In an embodiment, the processing unit 30 can analyse the reflected electromagnetic wave 200 as follows in order to determine the wave characteristic of the sea level S. The wave characteristic of the sea level S can be a height or a speed of a wave in the sea level S. Due to or by a time of flight, an angle of flight and/or a Doppler effect of the reflected electromagnetic wave 200, the processing unit 30 can determine a height and a movement (speed) of a wave of the sea level S. For example, the time of flight t_{flight} of the reflected electromagnetic wave 200 can be calculated as t_{flight} = d/(2·c₀), wherein c₀ is the speed of light. The distance d between the receiver 20 to the wave of the sea level S, where the electromagnetic wave 200 has been reflected, is then calculated as d = (t_{flight} ·c₀)/2.

The first electromagnetic signal 100 may be, according to possible embodiments, a radar signal such as a multi-frequency radar or LIDAR or an ultrasonic signal. In general, according to the different embodiments of the present invention, the first electromagnetic signal 100 may be of any frequency, provided that it can be transmitted to and reflected by the sea level S. When the first electromagnetic signal 100 impinges the sea level S, the reflected second electromagnetic signal 200 is transmitted towards the receiver 20. The processing unit 30 then analyses the second electromagnetic signal 200 (and if necessary the first electromagnetic signal 100) for determining a wave characteristic of the sea level S.

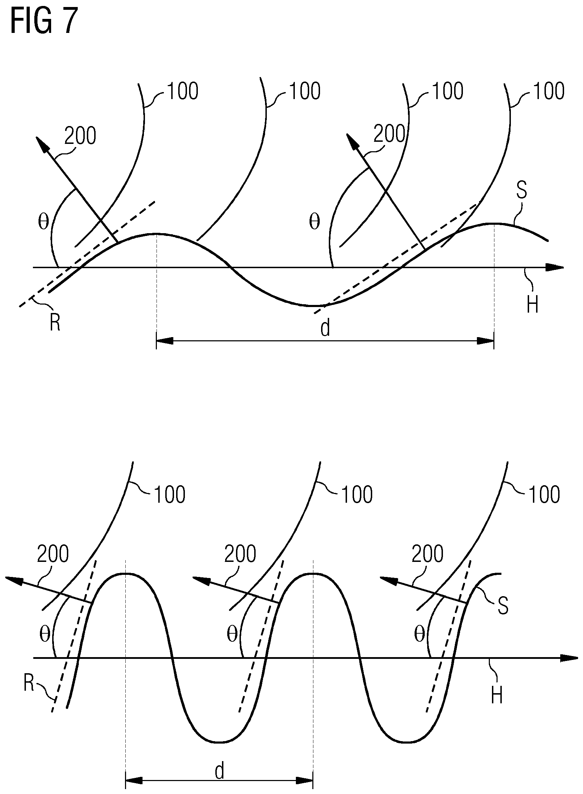

**Fig. 7** shows a principle of analysing the reflected electromagnetic wave 200 such that the wave characteristic of the sea level S is determined according to an embodiment of the present invention. The wave characteristic of the sea level S is indirectly measured by the height of the waves of the sea level S around the wind turbine 1. The wind causes waves in the sea level S. The stronger the wind is, the higher the waves are and the distance between peaks of the waves increases. It has been found out that there is a correlation between the wind speed/wind direction and a direction of the reflected electromagnetic wave 200. In more detail, the electromagnetic wave 100, for example the radar signal 100, is reflected by the waves in the sea level S. A basic principle in determining the wave characteristic is schematically shown in Fig. 7 under use of the Bragg's law 2d·sinθ = n·λ, where d is a distance between two peaks of waves of the sea level S, θ is a scattering angle of the reflected electromagnetic wave 200 with respect to a horizontal H, λ is a wavelength of the electromagnetic wave 100, 200, and n is a positive integer which usually indicates a diffraction order.

The top view in Fig. 7 shows a condition of low wind, whereas the bottom top view in Fig. 7 shows a condition of strong wind. The top view in Fig. 7 shows reflection planes R of the sea level S having a smaller angle with respect to the horizontal H, whereas the top view in Fig. 7 shows reflection planes R of the sea level S having a larger angle with respect to the horizontal H. Based on the angle of the reflection planes R, the scattering angle θ is changed.

Depending on the distance of the waves d, the reflection angle of the reflected electromagnetic wave 200 with respect to the horizontal H is different. This effect is known as Bragg effect or Bragg reflection which can be used in the field of meteorology for a calculation of the wind speed or direction.

To calculate the wind speed and direction, first and second order Bragg peaks have to be investigated. The transmitter 10 itself operates in a frequency band, where the wave length λ = c₀/f is in a range d as either a distance between two wave peaks or a peak-to-peak height of a wave of the sea level S. A multi-frequency radar and also a Doppler effect of moving waves in the sea level S can be used. To calculate the wind speed, the first order backscatter is used with λ/2 as wavelength. To estimate the wind direction, two first order scatters can be used. Typical frequencies of the electromagnetic wave 100 are 7.5 to 25 Mhz. This offers a range of some kilometres with sufficient power of the (radar) transmitter 10.

A frequency modulated interrupted continuous wave (FMIC) radar can preferably be used for such type of weather radar.

C. ZHAO et. al., "Wind direction measurements using HF ground wave radars based on a circular receive array", published in 2017 Progress in Electromagnetics Research Symposium, Singapore 2017, discloses some more advanced measurement algorithms. For example, the wind direction can be calculated by the ratio of two first order Bragg reflections.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A wind turbine (1) configured to be disposed in or above a sea floor (S) and comprising a tower (2) configured to protrude from a sea level (S), a nacelle (3) mounted to the tower and a hub (4) mounted to the nacelle (3), the wind turbine (1) further comprising:
a transmitter (10) configured to transmit a first electromagnetic wave (100) to be reflected on the sea level (S) and a receiver (20) configured to receive the reflected electromagnetic wave (200), wherein at least one of the transmitter (10) and the receiver (20) is arranged either at the nacelle (3), the hub (4) or the tower (2); and
a processing unit (30) being in communication with the receiver (20) and configured to analyse the reflected electromagnetic wave (200) such that a wave characteristic of the sea level (S) is determined.

2. The wind turbine (1) according to the preceding claim, wherein
the transmitter (10) and the receiver (20) are connected via a combiner (13) to a common antenna (14).

3. The wind turbine (1) according to any one of the preceding claims, further comprising
a radome (15) being arranged at the hub (4) and covering an antenna (11, 21, 14) of the transmitter (10) and/or the receiver (20).

4. The wind turbine (1) according to any one of the preceding claims, wherein
the processing unit (30) is arranged at the nacelle (3) and the transmitter (10) and the receiver (20) are arranged at the hub (4), wherein
the transmitter (10) comprises a signal generator (12) and the receiver (20) comprises an amplifier (22);
the signal generator (12) and the amplifier (22) are arranged at the hub (4); and
the signal generator (12) and the amplifier (22) are connected via an optical link (16) or a wireless connection to the processing unit (30).

5. The wind turbine (1) according to any one of the preceding claims, wherein
the processing unit (30) is configured to determine at least one of a wind speed, a wind direction, a wind forecast and a ship approximation condition from the determined wave characteristic of the sea level (S), wherein the ship approximation condition is a condition that allows a ship to approximate or dock at the wind turbine (1).

6. The wind turbine (1) according to any one of the preceding claims, wherein
the processing unit (30) is configured to determine the wave characteristic based on an angle of a reflection plane (R) of the sea level (S) with respect to a horizontal (H).

7. The wind turbine (1) according to any one of the preceding claims, wherein
the processing unit (30) is configured to use the Bragg's law 2d·sinθ = n·λ in determining the wave characteristic, where
d is either a distance between two wave peaks or a peak-to-peak height of a wave of the sea level (S),
θ is a scattering angle of the reflected electromagnetic wave (200) with respect to a horizontal (H),
λ is a wavelength of the electromagnetic wave (100, 200), and
n is a positive integer.

8. A method of determining a wave characteristic of a sea level (S), the method comprising the following steps:
disposing a wind turbine (1) in or above a sea floor (S), the wind turbine (1) comprising a tower (2) protruding from a sea level (S), a nacelle (3) mounted to the tower (2), a hub (4) mounted to the nacelle (3), a transmitter (10) and a receiver (20), wherein at least one of the transmitter (10) and the receiver (20) is arranged either at the nacelle (3), the hub (4) or the tower (2);
transmitting by a transmitter (10) a first electromagnetic wave (100) to be reflected on the sea level (S);
receiving the reflected electromagnetic wave (200) by the receiver (20);
analysing the reflected electromagnetic wave (200); and
determining a wave characteristic of the sea level (S) based on the analysed, reflected electromagnetic wave (200).

9. The method according to the preceding claim, further comprising a step of:
determining at least one of a wind speed, a wind direction, a wind forecast and a ship approximation condition from the determined wave characteristic of the sea level (S), wherein the ship approximation condition is a condition that allows a ship to approximate or dock at the wind turbine (1).

10. The method according to any one of the preceding claims 8 and 9, wherein
the wave characteristic is determined based on an angle of a reflection plane (R) of the sea level (S) with respect to a horizontal (H).

11. The method according to any one of the preceding claims 8 to 10, wherein
the wave characteristic is determined by use of the Bragg's law 2d·sinθ = n·λ, where
d is either a distance between two wave peaks or a peak-to-peak height of a wave of the sea level (S),
θ is a scattering angle of the reflected electromagnetic wave (200) with respect to a horizontal (H),
λ is a wavelength of the electromagnetic wave (100, 200), and
n is a positive integer.
